# EUROPÄISCHE PATENTSCHRIFT

(11) **EP 4 361 998 B1**
(45) Veröffentlichungstag und Bekanntmachung des Hinweises auf die Patenterteilung: **02.12.2026**
(21) Anmeldenummer: 23196376.0
(22) Anmeldetag: 08.09.2023
(51) Int. Cl.: G08G 1/16, B60W 50/14, G06V 20/58, H04W 4/46

(54) **VERFAHREN, FAHRZEUG, COMPUTERPROGRAMMPRODUKT, COMPUTERLESBARES MEDIUM SOWIE DATENTRÄGERSIGNAL**
METHOD, VEHICLE, COMPUTER PROGRAM PRODUCT, COMPUTER-READABLE MEDIUM AND DATA CARRIER SIGNAL
PROCÉDÉ, VÉHICULE, PRODUIT PROGRAMME INFORMATIQUE, SUPPORT LISIBLE PAR ORDINATEUR ET SIGNAL DE SUPPORT DE DONNÉES

(30) Priorität: 25.10.2022 DE 102022211283
(43) Veröffentlichungstag der Anmeldung: 01.05.2024
(73) Patentinhaber: VOLKSWAGEN AG, 38440 Wolfsburg (DE)
(72) Erfinder: Puller, Niklas, 38106 Braunschweig (DE); Hartog, Johannes, 38547 Calberlah (DE); Biehle, Thomas, 29393 Groß Oesingen (DE); Schultz, Holger, 14612 Falkensee (DE); Peters, Steffen, 14793 Buckautal (DE); Klein, Simon, 38104 Braunschweig (DE); Grimaldi, Luigi, 38448 Wolfsburg (DE)

(56) Entgegenhaltungen:
- EP-B1- 2 655 119
- DE-A1- 102008 011 228
- DE-A1- 102010 011 497
- DE-A1- 102012 023 108
- DE-A1- 102017 204 529

## Beschreibung

Die vorliegende Erfindung betrifft ein Verfahren, ein Fahrzeug, ein Computerprogrammprodukt, ein computerlesbares Medium und ein Datenträgersignal.

Es sind Totwinkelwarner an Außenspiegeln außerhalb des Fahrzeuges bekannt, welche einen Fahrer eines Fahrzeuges beim Spurwechsel vor seitlichen Kollisionen mit anderen Verkehrsteilnehmern, die sich im nicht sichtbaren Bereich der Spiegel befinden, warnen. Diese Totwinkelwarner an Außenspiegeln können jedoch nachteiligerweise nicht immer im Blickfeld des Fahrers sein. Ferner wird hierbei nur der Fahrer, der den Spurwechsel vollziehen möchte, gewarnt.

Sowohl im dichten Verkehr (bspw. Stau auf Autobahn, Stadtverkehr) als auch bei höheren Relativgeschwindigkeiten auf der Autobahn sowie zusätzlich durch Unaufmerksamkeit können Situationen entstehen, bei denen ein Fahrer eines ersten Fahrzeugs trotz gesetztem Fahrtrichtungsanzeiger den Spurwechselwunsch eines anderen Fahrers eines zweiten Fahrzeuges nicht unmittelbar wahrnimmt. Für den Fahrer mit Spurwechselwunsch kann dies mindestens eine Erschwerung des Manövers bedeuten, kann jedoch auch darüber hinaus zu gefährlichen Situationen führen (bspw. beim Auffahren auf ein langsameres Fahrzeug oder dem Ende der genutzten Spur).

Aus der DE 102010052406 A1 ist ein Verfahren zur Vermeidung oder Verminderung von Fahrzeugkollisionen bekannt. Aus der DE 10 2010 011 497 A1 ist ebenfalls ein Verfahren zur Verhinderung von Fahrzeugkollisionen bekannt. Die DE 10 2008 011 228 A1 offenbart ein Fahrerassistenzsystem, wobei mittels Umgebungssensoren die Fahrzeugumgebung eines ersten Fahrzeugs überwacht wird. Die DE 10 2012 023 108 A1 zeigt ein Verfahren, bei dem eine Spurwechselinformation eines anderen Fahrzeugs durch das erste Fahrzeug empfangen wird.

Es ist Aufgabe der vorliegenden Erfindung, die voranstehend beschriebenen Nachteile zumindest teilweise zu beheben. Insbesondere ist es Aufgabe der vorliegenden Erfindung, Fahrzeugkollisionen und/oder gefährliche Situationen zwischen Verkehrsteilnehmern besonders vorteilhaft zu verhindern. Insbesondere ist es Aufgabe der Erfindung, einen Fahrer eines sich auf einem ersten Fahrstreifen befindlichen Fahrzeuges zumindest auf einen Spurwechselwunsch zumindest eines zweiten Fahrzeuges auf den ersten Fahrstreifen auf besonders sichere und/oder friedfertige und/oder behutsame Weise aufmerksam zu machen.

Die voranstehende Aufgabe wird gelöst durch ein Verfahren mit den Merkmalen des Anspruchs 1 und einem Fahrzeug mit den Merkmalen des Anspruchs 9 und einem Computerprogrammprodukt mit den Merkmalen des Anspruchs 11 und einem computerlesbaren Medium mit den Merkmalen des Anspruchs 12 sowie einem Datenträgersignal mit den Merkmalen des Anspruchs 13. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug und/oder dem Computerprogrammprodukt und/oder dem computerlesbaren Medium und/oder dem Datenträgersignal und jeweils umgekehrt, sodass bezüglich der Offenbarung zu den einzelnen Erfindungsaspekten stets wechselseitig Bezug genommen wird bzw. werden kann.

Gemäß einem ersten Aspekt zeigt die vorliegende Erfindung ein Verfahren zum Aufmerksammachen eines Fahrers eines sich auf einem ersten Fahrstreifen befindlichen ersten Fahrzeuges auf einen Spurwechselwunsch zumindest eines zweiten Fahrzeuges auf den ersten Fahrstreifen. Das Verfahren umfasst als einen ersten Schritt ein (insbesondere automatisiertes) Erkennen des Spurwechselwunsches zumindest des zweiten Fahrzeuges durch das erste Fahrzeug, wobei insbesondere das Erkennen mittels einer Erkennungsvorrichtung des ersten Fahrzeuges erfolgt. Ferner umfasst das Verfahren als einen weiteren Schritt ein (insbesondere automatisiertes) Anzeigen des Spurwechselwunsches des zweiten Fahrzeuges dem Fahrer des ersten Fahrzeuges in einem Blickfeld des Fahrers in einem Vorderbereich eines Fahrzeuginnenraums des ersten Fahrzeuges, um den Fahrer des ersten Fahrzeuges auf den Spurwechselwunsch des zweiten Fahrzeuges aufmerksam zu machen, wobei insbesondere das Anzeigen des Spurwechselwunsches mittels einer Anzeigevorrichtung, bspw. einem Lichtstreifen, des ersten Fahrzeuges erfolgt.

Die zuvor und die im Nachfolgenden beschrieben Verfahrensschritte können, sofern technisch sinnvoll, einzeln, zusammen, einfach, mehrfach, zeitlich parallel und/oder nacheinander in beliebiger Reihenfolge ausgeführt werden.

Insbesondere ist das erste Fahrzeug ein Kraftfahrzeug, bspw. ein Personenkraftwagen oder ein Lastkraftwagen, und/oder ist das zweite Fahrzeug ein Kraftfahrzeug, bspw. ein Personenkraftwagen oder ein Lastkraftwagen, und/oder ist ein drittes Fahrzeug ein Kraftfahrzeug, bspw. ein Personenkraftwagen oder ein Lastkraftwagen. Das dritte Fahrzeug kann auch als ein weiteres Fahrzeug verstanden werden, und umgekehrt.

Insbesondere erfolgt das Anzeigen des Spurwechselwunsches des zweiten Fahrzeuges dem Fahrer des ersten Fahrzeuges in einem Blickfeld des Fahrers in einem Vorderbereich eines Fahrzeuginnenraums des ersten Fahrzeuges optisch, vorzugsweise nur bzw. rein optisch. Somit kann der Fahrer des ersten Fahrzeuges besonders behutsam auf den Spurwechselwunsch des zweiten Fahrzeuges hingewiesen werden, ohne dass sich der Fahrer des ersten Fahrzeuges bedrängt bzw. attackiert fühlt, bspw. durch ein akustisches Signal. Das optische Anzeigen des Spurwechselwunsches erfolgt erfindungsgemäß mittels eines in dem Blickfeld des Fahrers in einem Vorderbereich eines Fahrzeuginnenraums des ersten Fahrzeuges angeordneten Lichtstreifens.

Insbesondere ist das Aufmerksammachen des Fahrers des ersten Fahrzeuges als ein unauffälliges Warnen des Fahrers des ersten Fahrzeuges zu verstehen, um den Fahrer des ersten Fahrzeuges auf den Spurwechselwunsch des zweiten Fahrzeuges besonders friedfertig bzw. behutsam aufmerksam zu machen. Das Anzeigen des Spurwechselwunsches des zweiten Fahrzeuges dem Fahrer des ersten Fahrzeuges in dem Blickfeld des Fahrers in dem Fahrzeuginnenraum des ersten Fahrzeuges kann daher auch als ein passives Informieren des Fahrers des ersten Fahrzeuges über den Spurwechselwunsch des zweiten Fahrzeuges verstanden werden.

Der Vorderbereich des Fahrzeuginnenraums des ersten Fahrzeuges ist insbesondere der Bereich des Fahrzeuginnenraums in Vorwärtsrichtung des Fahrzeuges vor dem Fahrer und/oder Beifahrer des ersten Fahrzeuges. Bspw. befindet sich in dem Vorderbereich des Fahrzeuges ein Armaturenbrett und/oder ein Lenkrad.

Als Blickfeld des Fahrers des ersten Fahrzeuges ist insbesondere das Blickfeld des Fahrers des ersten Fahrzeuges mit in Vorwärtsrichtung gerichtetem Blick zu verstehen. Dadurch, dass der Spurwechselwunsch des zweiten Fahrzeuges dem Fahrer des ersten Fahrzeuges in dem Blickfeld in dem Fahrzeuginnenraum des ersten Fahrzeuges angezeigt wird, wird erreicht, dass der Fahrer des ersten Fahrzeuges auch bei einem nach vorne gerichteten Blick den Spurwechselwunsch des zweiten Fahrzeuges besonders vorteilhaft wahrnehmen kann, was bei einer Anzeige des Spurwechselwunsches in einem Außenspiegel des ersten Fahrzeuges nachteiligerweise nur bedingt oder schlecht möglich sein kann.

Es kann von Vorteil sein, wenn bei einem erfindungsgemäßen Verfahren das erste Fahrzeug den Spurwechselwunsch des zweiten Fahrzeuges dem Fahrer des ersten Fahrzeuges nur anzeigt, wenn der Spurwechselwunsch Relevanz für das erste Fahrzeug hat. Somit kann ein unnötiges Aufmerksammachen des Fahrers des ersten Fahrzeugs bei unkritischen Situationen vermieden werden. Insbesondere kann die Relevanz des Spurwechselwunsches in Abhängigkeit einer Fahrspur des ersten Fahrzeuges und einer Fahrspur des zweiten Fahrzeuges bestimmt werden. Bspw. kann das erste Fahrzeug mittels einer Erfassungsvorrichtung zum Erfassen der Fahrzeugumgebung des ersten Fahrzeuges, bspw. einer Kamera, die Fahrspur des zweiten Fahrzeuges erfassen bzw. ermitteln. Alternativ oder zusätzlich ist denkbar, dass die Relevanz des Spurwechselwunsches in Abhängigkeit eines Abstands des ersten Fahrzeuges zu dem zweiten Fahrzeug bestimmt wird. Bspw. kann das erste Fahrzeug mittels einer Erfassungsvorrichtung, bspw. einer Kamera zum Erfassen der Fahrzeugumgebung des ersten Fahrzeuges, den Abstand des ersten Fahrzeuges zu dem zweiten Fahrzeug erfassen bzw. ermitteln. Alternativ oder zusätzlich ist denkbar, dass die Relevanz des Spurwechselwunsches in Abhängigkeit einer Geschwindigkeit des ersten Fahrzeuges und/oder des zweiten Fahrzeuges bestimmt wird. Bspw. kann das erste Fahrzeug mittels einer Erfassungsvorrichtung die Geschwindigkeit des ersten Fahrzeuges und/oder mittels einer (weiteren) Erfassungsvorrichtung die Geschwindigkeit des zweiten Fahrzeuges erfassen bzw. ermitteln. Es ist ferner denkbar, dass zumindest das erste Fahrzeug und das zweite Fahrzeug funktechnisch zum Austauschen von Informationen miteinander kommunizieren, bspw. mittels Cooperative Awareness Message (CAM), wobei insbesondere das zweite Fahrzeug seine Geschwindigkeit und/oder das zweite Fahrzeug die Position des zweiten Fahrzeuges und/oder das zweite Fahrzeug den Status zumindest eines Fahrtrichtungsanzeigers oder mehrerer Fahrtrichtungsanzeiger, bspw. linker und rechter Fahrtrichtungsanzeiger, des zweiten Fahrzeuges als Information bzw. Informationen dem ersten Fahrzeug (funktechnisch) mitteilt. Somit kann mittels CAM besonders einfach das zweite Fahrzeug dem ersten Fahrzeug mitteilen, ob ein Fahrtrichtungsanzeiger des zweiten Fahrzeuges aktiv ist und/oder welcher Fahrtrichtungsanzeiger, bspw. linker oder rechter Fahrtrichtungsanzeiger, aktiv ist, um zusätzlich eine Relevanz eines aktiven Fahrtrichtungsanzeigers berücksichtigen zu können. Ferner kann damit vorteilhafterweise eine Auswertung von Kameradaten entfallen.

Bei einem erfindungsgemäßen Verfahren erfolgt das Anzeigen des Spurwechselwunsches des zweiten Fahrzeuges dem Fahrer des ersten Fahrzeuges in dem Blickfeld des Fahrers in dem Fahrzeuginnenraum des ersten Fahrzeuges zumindest mittels eines Lichtstreifens, bspw. eines LED-Lichtstreifens, wobei sich der Lichtstreifen in einer Querrichtung des ersten Fahrzeuges erstreckt, wobei der Lichtstreifen insbesondere an einer Scheibenwurzel einer Frontscheibe des ersten Fahrzeuges angeordnet ist. Dadurch, dass der Spurwechselwunsch des zweiten Fahrzeuges dem Fahrer des ersten Fahrzeuges in dem Blickfeld in dem Fahrzeuginnenraum des ersten Fahrzeuges mittels des Lichtstreifens angezeigt wird, wird erreicht, dass der Fahrer des ersten Fahrzeuges auch bei einem nach vorne gerichteten Blick den Spurwechselwunsch des zweiten Fahrzeuges besonders vorteilhaft wahrnehmen kann. Insbesondere ist der Lichtstreifen ein länglicher Lichtstreifen, wobei sich vorzugsweise der längliche Lichtstreifen in einer Querrichtung des ersten Fahrzeuges erstreckt. Bspw. kann bei dem länglichen Lichtstreifen der Spurwechselwunsch des zweiten Fahrzeuges dem Fahrer des ersten Fahrzeuges durch ein längliches Lichtsignal, insbesondere durch ein längliches und blinkendes Lichtsignal, angezeigt werden. Somit kann die Anzeige des Spurwechselwunsches des zweiten Fahrzeuges in dem Blickfeld des Fahrers in dem Vorderbereich des Fahrzeuginnenraums des ersten Fahrzeuges einem Fahrtrichtungsanzeiger (Blinker) eines Fahrzeuges nachempfunden sein. Die Querrichtung des ersten Fahrzeuges ist insbesondere eine Richtung quer oder im Wesentlichen quer zu einer Vorwärtsrichtung des Fahrzeuges. Weiter kann vorteilhafterweise der längliche Lichtstreifen besonders einfach an einer Scheibenwurzel einer Frontscheibe des ersten Fahrzeuges angeordnet werden. Ferner weist bei einem erfindungsgemäßen Verfahren der Lichtstreifen einen ersten Lichtbereich und zumindest einen weiteren Lichtbereich auf, wobei der erste Lichtbereich und der weitere Lichtbereich separat bzw. unabhängig voneinander ansteuerbar sind, und wobei das Anzeigen des Spurwechselwunsches des zweiten Fahrzeuges dem Fahrer des ersten Fahrzeuges in Abhängigkeit einer Position des ersten Fahrzeuges in Bezug auf das zweite Fahrzeug in dem ersten Lichtbereich oder dem zweiten Lichtbereich des Lichtstreifens erfolgt. Durch die zumindest zwei separat bzw. unabhängig voneinander ansteuerbaren Lichtbereiche kann dem Fahrer des ersten Fahrzeuges besonders einfach angezeigt werden, auf welcher Seite des ersten Fahrzeuges, insbesondere links oder rechts, sich das zweite Fahrzeug befindet. Es kann weiter von Vorteil sein, wenn bei einem erfindungsgemäßen Verfahren der Lichtstreifen eine Länge von 0,5 - 3,0 m, insbesondere eine Länge von 1,0 - 2,5 m, aufweist.

Es kann von Vorteil sein, wenn bei einem erfindungsgemäßen Verfahren das Anzeigen des Spurwechselwunsches des zweiten Fahrzeuges dem Fahrer des ersten Fahrzeuges in dem Blickfeld des Fahrers in dem Fahrzeuginnenraum des ersten Fahrzeuges durch ein sich veränderndes Lichtsignal, insbesondere durch ein gelb blinkendes Lichtsignal, erfolgt. Somit kann der Fahrer des ersten Fahrzeuges besonders auf den Spurwechselwunsch des zweiten Fahrzeuges aufmerksam gemacht werden. Das sich verändernde Lichtsignal kann bspw. ein blinkendes Lichtsignal sein. Insbesondere kann das sich verändernde Lichtsignal ein gelb blinkendes Lichtsignal sein. Somit kann die Anzeige des Spurwechselwunsches des zweiten Fahrzeuges in dem Blickfeld des Fahrers in dem Vorderbereich des Fahrzeuginnenraums des ersten Fahrzeuges einem Fahrtrichtungsanzeiger (Blinker) eines Fahrzeuges besonders getreu nachempfunden sein.

Es kann von Vorteil sein, wenn bei einem erfindungsgemäßen Verfahren (alternativ oder zusätzlich zum Anzeigen des Spurwechselwunsches mittels eines Lichtstreifens) das Anzeigen des Spurwechselwunsches des zweiten Fahrzeuges dem Fahrer des ersten Fahrzeuges in dem Blickfeld des Fahrers in dem Fahrzeuginnenraum des ersten Fahrzeuges in einer Anzeigevorrichtung mithilfe einer Visualisierung eines Fahrzeugumfeldes des ersten Fahrzeuges erfolgt. Somit kann dem Fahrer des ersten Fahrzeuges auf besonders eingängige Weise ein Spurwechselwunsch des zweiten Fahrzeuges angezeigt werden. Die Anzeigevorrichtung kann bspw. ein Display, d. h. Bildschirm, in dem ersten Fahrzeug sein. Die Visualisierung des Fahrzeugumfeldes des ersten Fahrzeuges kann als eine Nachbildung des Fahrzeugumfeldes des ersten Fahrzeuges auf der Anzeigevorrichtung des Fahrzeuges verstanden werden. Das Anzeigen des Spurwechselwunsches des zweiten Fahrzeuges mithilfe der Visualisierung des Fahrzeugumfeldes des ersten Fahrzeuges kann bspw. dadurch erfolgen, dass der Spurwechselwunsch des zweiten Fahrzeuges durch ein blinkendes Lichtsignal in der Anzeigevorrichtung des Fahrzeuges bei dem zweiten Fahrzeug angezeigt wird.

Es kann von Vorteil sein, wenn bei einem erfindungsgemäßen Verfahren ein jeweiliges Anzeigen des Spurwechselwunsches des zweiten Fahrzeuges sowie eines weiteren Fahrzeuges in dem Blickfeld des Fahrers in dem Fahrzeuginnenraum des ersten Fahrzeuges bei einem jeweiligen Erkennen eines Spurwechselwunsches des zweiten Fahrzeuges sowie zumindest eines weiteren Fahrzeuges auf den ersten Fahrstreifen erfolgt, um den Fahrer des ersten Fahrzeuges auf den Spurwechselwunsch des zweiten Fahrzeuges sowie auf den Spurwechselwunsch des weiteren Fahrzeuges aufmerksam zu machen. Somit können bspw. auch Fahrzeugkollisionen und/oder gefährliche Situationen bspw. auf einer dreispurigen Autobahn verbessert vermieden werden, bei der das zweite Fahrzeug und das weitere Fahrzeug jeweils einen Spurwechselwunsch zum mittleren (bzw. ersten) Fahrstreifen haben, auf welchem sich das erste Fahrzeug befindet. Bspw. kann bei einem Lichtstreifen mit einem ersten Lichtbereich und zumindest einem weiteren, unabhängig vom ersten Lichtbereich ansteuerbaren Lichtbereich das jeweilige (insbesondere gleichzeitige) Anzeigen der zumindest zwei Spurwechselwünsche durch ein jeweiliges Lichtsignal in den beiden Lichtbereichen erfolgen.

Es kann von Vorteil sein, wenn bei einem erfindungsgemäßen Verfahren für das Erkennen des Spurwechselwunsches zumindest des zweiten Fahrzeuges durch das erste Fahrzeug ein Erfassen der Fahrzeugumgebung des ersten Fahrzeuges durch das erste Fahrzeug erfolgt, wobei insbesondere das Erfassen der Fahrzeugumgebung des ersten Fahrzeuges mittels zumindest einer Kamera des ersten Fahrzeuges erfolgt. Somit kann ein Spurwechselwunsch zumindest des zweiten Fahrzeuges durch das erste Fahrzeug auch dann erkannt werden, wenn das erste Fahrzeug und das zweite Fahrzeug funktechnisch keine Informationen, wie bspw. einen Spurwechselwunsch des zweiten Fahrzeuges mittels Cooperative Awareness Message, miteinander austauschen. Erfindungsgemäß ist es vorgesehen, dass für das Erkennen des Spurwechselwunsches zumindest des zweiten Fahrzeuges durch das erste Fahrzeug das zweite Fahrzeug zumindest den Spurwechselwunsch dem ersten Fahrzeug funktechnisch mitteilt, wobei insbesondere das funktechnische Mitteilen zumindest des Spurwechselwunsches des zweiten Fahrzeuges mittels einer Cooperative Awareness Message erfolgt. Vorteilhafterweise kann durch das funktechnische Mitteilen des Spurwechselwunsches des zweiten Fahrzeuges mittels der Cooperative Awareness Message von dem ersten Fahrzeug erkannt werden, dass ein tatsächlicher Spurwechselwunsch des zweiten Fahrzeuges besteht, sodass die Warnung bzw. das Aufmerksammachen des Fahrers des ersten Fahrzeuges besonders konkret ist. Das funktechnische Mitteilen des Spurwechselwunsches des zweiten Fahrzeuges mittels der Cooperative Awareness Message erfolgt insbesondere dadurch, dass mittels der Cooperative Awareness Message dem ersten Fahrzeug mitgeteilt wird, dass das zweite Fahrzeug einen Fahrtrichtungsanzeiger betätigt hat.

Gemäß einem zweiten Aspekt zeigt die vorliegende Erfindung ein (erstes) Fahrzeug, wobei das Fahrzeug dazu ausgebildet ist, ein erfindungsgemäßes Verfahren durchzuführen, wobei das (erste) Fahrzeug eine Erkennungsvorrichtung zum Erkennen eines Spurwechselwunsches zumindest eines zweiten Fahrzeuges aufweist. Ferner umfasst das (erste) Fahrzeug eine Anzeigevorrichtung zum Anzeigen zumindest des Spurwechselwunsches des zweiten Fahrzeuges einem Fahrer des (ersten) Fahrzeuges in einem Blickfeld des Fahrers in einem Vorderbereich eines Fahrzeuginnenraums des (ersten) Fahrzeuges, um den Fahrer des (ersten) Fahrzeuges auf den Spurwechselwunsch des zweiten Fahrzeuges aufmerksam zu machen. Das Fahrzeug kann auch als das erste Fahrzeug verstanden werden, und umgekehrt.

Die Erkennungsvorrichtung des Fahrzeuges zum Erkennen eines Spurwechselwunsches zumindest des zweiten Fahrzeuges kann zumindest eine Recheneinheit und/oder eine Speichereinheit aufweisen, um bspw. anhand einer mittels einer Erfassungsvorrichtung erfassten Fahrzeugumgebung des Fahrzeuges bzw. den dadurch gewonnenen Daten und/oder bspw. mittels funktechnisch mitgeteilten Informationen bzw. den Daten, zu ermitteln bzw. zu erkennen, ob ein Spurwechselwunsch des zweiten Fahrzeuges vorliegt.

Die Anzeigevorrichtung ist erfindungsgemäß ein Lichtstreifen in dem Fahrzeug.

Es ist insbesondere denkbar, dass der Spurwechselwunsch des zweiten Fahrzeuges dem Fahrer in dem (ersten) Fahrzeug sowohl mittels des Lichtstreifens als auch mittels eines Displays in dem Fahrzeug mithilfe einer Visualisierung eines Fahrzeugumfeldes des (ersten) Fahrzeuges angezeigt wird. Somit kann das Aufmerksammachen des Fahrers des Fahrzeuges auf den Spurwechselwunsch des zweiten Fahrzeuges besonders vorteilhaft sein.

Es kann von Vorteil sein, wenn bei einem erfindungsgemäßen Fahrzeug das Fahrzeug ferner eine Erfassungsvorrichtung zum Erfassen der Fahrzeugumgebung des Fahrzeuges aufweist. Die Erfassungsvorrichtung zum Erfassen der Fahrzeugumgebung des Fahrzeuges kann bspw. eine im Fahrzeug verbaute Kamera sein. Alternativ oder zusätzlich kann das Fahrzeug eine Empfangsvorrichtung zum Empfangen zumindest einer funktechnischen Mitteilung des zweiten Fahrzeuges über den Spurwechselwunsch des zweiten Fahrzeuges aufweisen. Insbesondere können zumindest das erste Fahrzeug und das zweite Fahrzeug in einem ständigen funktechnischen Austausch stehen, bspw. mittels Cooperative Awareness Message (CAM). Anhand der funktechnischen Mitteilungen des zweiten Fahrzeugs an das erste Fahrzeug mittels CAM kann das erste Fahrzeug aus den funktechnischen Mitteilungen erkennen, ob ein Spurwechselwunsch zumindest des zweiten Fahrzeuges vorliegt, indem bspw. eine Betätigung des Fahrtrichtungsanzeigers des zweiten Fahrzeuges mitgeteilt wird. Das Fahrzeug gemäß dem zweiten Aspekt der Erfindung weist damit dieselben Vorteile auf, wie sie bereits zu dem Verfahren gemäß dem ersten Aspekt der Erfindung beschrieben worden sind.

Gemäß einem dritten Aspekt zeigt die vorliegende Erfindung ein Computerprogrammprodukt, umfassend Befehle, die bewirken, dass ein erfindungsgemäßes Fahrzeug Verfahrensschritte gemäß einem erfindungsgemäßen Verfahren ausführt.

Das Computerprogrammprodukt kann als computerlesbarer Anweisungscode implementiert sein. Das Computerprogrammprodukt kann ferner sowohl mittels einer Software, als auch mittels einer oder mehrerer spezieller elektronischer Schaltungen, d. h. in Hardware oder in beliebig hybrider Form, d. h. mittels Software-Komponenten und Hardware-Komponenten, realisiert sein.

Das Computerprogrammprodukt gemäß dem dritten Aspekt der Erfindung weist damit dieselben Vorteile auf, wie sie bereits zu dem Verfahren gemäß dem ersten Aspekt der Erfindung bzw. dem Fahrzeug gemäß dem zweiten Aspekt der Erfindung beschrieben worden sind.

Gemäß einem vierten Aspekt zeigt die vorliegende Erfindung ein computerlesbares Medium, auf dem ein erfindungsgemäßes Computerprogrammprodukt gespeichert ist. Insbesondere kann das Computerprogrammprodukt auf einem computerlesbaren Speichermedium wie einer Datendisk, einem Wechsellaufwerk, einem flüchtigen oder nichtflüchtigen Speicher oder einem eingebauten Speicher/Prozessor abgespeichert sein.

Das computerlesbare Medium gemäß dem vierten Aspekt der Erfindung weist damit dieselben Vorteile auf, wie sie bereits zu dem Verfahren gemäß dem ersten Aspekt der Erfindung bzw. dem Fahrzeug gemäß dem zweiten Aspekt der Erfindung bzw. dem Computerprogrammprodukt gemäß dem dritten Aspekt der Erfindung beschrieben worden sind.

Gemäß einem fünften Aspekt zeigt die vorliegende Erfindung ein Datenträgersignal, das ein erfindungsgemäßes Computerprogrammprodukt überträgt. Insbesondere kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann.

Das Datenträgersignal gemäß dem fünften Aspekt der Erfindung weist damit dieselben Vorteile auf, wie sie bereits zu dem Verfahren gemäß dem ersten Aspekt der Erfindung bzw. dem Fahrzeug gemäß dem zweiten Aspekt der Erfindung bzw. dem Computerprogrammprodukt gemäß dem dritten Aspekt der Erfindung bzw. dem computerlesbaren Medium gemäß dem vierten Aspekt der Erfindung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumlicher Anordnungen und Verfahrensschritte, können sowohl für sich als auch in den verschiedenen Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen schematisch:
- Fig. 1: ein Fahrzeug, und
- Fig. 2: ein Verfahren.

In den nachfolgenden Figuren werden für die gleichen technischen Merkmale auch von unterschiedlichen Ausführungsbeispielen identische Bezugszeichen verwendet.

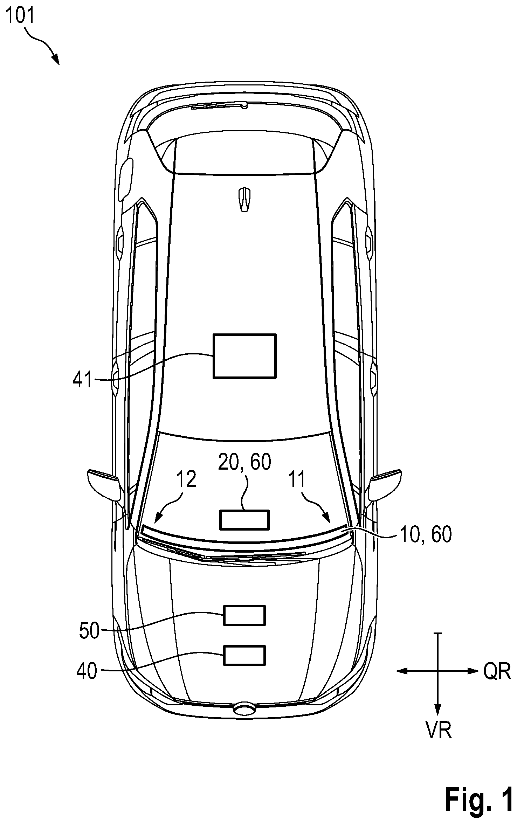

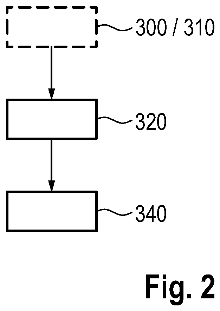

Fig. 1 zeigt in einer Draufsicht ein Fahrzeug 101, wobei das Fahrzeug 101 eine Erkennungsvorrichtung 50 zum Erkennen eines Spurwechselwunsches zumindest eines zweiten Fahrzeuges (nicht dargestellt) aufweist. Das Fahrzeug 101 kann auch als erstes Fahrzeug verstanden werden. Die Erkennungsvorrichtung 50 des Fahrzeuges kann bspw. ein Steuergerät des Fahrzeuges 101 sein. Ferner umfasst das Fahrzeug zumindest eine Anzeigevorrichtung 60 zum Anzeigen zumindest des Spurwechselwunsches des zweiten Fahrzeuges einem Fahrer des Fahrzeuges 101 in einem Blickfeld des Fahrers in einem Vorderbereich eines Fahrzeuginnenraums des Fahrzeuges 101, um den Fahrer des Fahrzeuges 101 auf den Spurwechselwunsch des zweiten Fahrzeuges aufmerksam zu machen. Der Vorderbereich des Fahrzeuginnenraums des Fahrzeuges 101 ist insbesondere der Bereich des Fahrzeuginnenraums in Vorwärtsrichtung VR des Fahrzeuges 101 vor dem Fahrer und/oder Beifahrer des Fahrzeuges 101. Die Anzeigevorrichtung 60 ist erfindungsgemäß ein Lichtstreifen 10. Alternativ kann die Anzeigevorrichtung 60 zusätzlich ein Display 20 umfassen. Der Lichtstreifen 10 erstreckt sich erfindungsgemäß in einer Querrichtung QR des Fahrzeuges 101, wobei insbesondere der Lichtstreifen 10 an einer Scheibenwurzel einer Frontscheibe des Fahrzeuges 101 angeordnet ist. Vorzugsweise erstreckt sich ferner der Lichtstreifen 10 über die komplette oder im Wesentlichen in dem Fahrzeuginnenraum über die komplette Breite des Fahrzeuges 101. Ferner weist erfindungsgemäß der Lichtstreifen 10 einen ersten Lichtbereich 11 und zumindest einen weiteren Lichtbereich 12 auf, wobei der erste Lichtbereich 11 und der weitere Lichtbereich 12 separat voneinander ansteuerbar sind. Beispielhaft wird der erste Lichtbereich 11 des Lichtstreifens 10 durch ein erstes Ende des Lichtstreifens 10 und der zweite Lichtbereich 12 des Lichtstreifens 10 durch ein von dem ersten Ende unterschiedlichen zweiten Ende des Lichtstreifens 10 gebildet. Bspw. kann der erste Lichtbereich 5 - 75 cm, insbesondere 20 - 50 cm, des Lichtstreifens 10 ausbilden und/oder kann der zweite Lichtbereich 5 - 75 cm, insbesondere 20 - 50 cm, des Lichtstreifens 10 ausbilden. Es kann weiter von Vorteil sein, wenn das Fahrzeug 101 zusätzlich, d. h. optional, eine Erfassungsvorrichtung 40 zum Erfassen der Fahrzeugumgebung des Fahrzeuges 101, bspw. eine Kamera, und/oder eine Empfangsvorrichtung 41 zum Empfangen zumindest einer funktechnischen Mitteilung des zweiten Fahrzeuges über den Spurwechselwunsch des zweiten Fahrzeuges aufweist. Ferner kann das Fahrzeug dazu ausgebildet sein, ein Verfahren, wie es bspw. zu Fig. 2 beschrieben ist, durchzuführen.

Fig. 2 offenbart ein Verfahren zum Aufmerksammachen eines Fahrers eines sich auf einem ersten Fahrstreifen befindlichen ersten Fahrzeuges 101 auf einen Spurwechselwunsch zumindest eines zweiten Fahrzeuges auf den ersten Fahrstreifen. Das Verfahren umfasst als einen Schritt ein Erkennen 320 des Spurwechselwunsches zumindest des zweiten Fahrzeuges durch das erste Fahrzeug 101. Ferner umfasst das Verfahren als einen Schritt ein Anzeigen 340 des Spurwechselwunsches des zweiten Fahrzeuges dem Fahrer des ersten Fahrzeuges 101 in einem Blickfeld des Fahrers in einem Vorderbereich eines Fahrzeuginnenraums des ersten Fahrzeuges 101, um den Fahrer des ersten Fahrzeuges 101 auf den Spurwechselwunsch des zweiten Fahrzeuges aufmerksam zu machen.

Es kann weiter von Vorteil sein, wenn bei dem Verfahren zusätzlich, d. h. optional, das erste Fahrzeug 101 den Spurwechselwunsch des zweiten Fahrzeuges dem Fahrer des ersten Fahrzeuges 101 nur anzeigt 340, wenn der Spurwechselwunsch Relevanz für das erste Fahrzeug 101 hat, wobei die Relevanz des Spurwechselwunsches in Abhängigkeit einer Fahrspur des ersten Fahrzeuges 101 und einer Fahrspur des zweiten Fahrzeuges und/oder in Abhängigkeit eines Abstands des ersten Fahrzeuges 101 zu dem zweiten Fahrzeug und/oder in Abhängigkeit einer Geschwindigkeit des ersten Fahrzeuges 101 und/oder des zweiten Fahrzeuges bestimmt wird.

Es kann weiter von Vorteil sein, wenn bei dem Verfahren zusätzlich, d. h. optional, das Anzeigen 340 des Spurwechselwunsches des zweiten Fahrzeuges dem Fahrer des ersten Fahrzeuges 101 in dem Blickfeld des Fahrers in dem Fahrzeuginnenraum des ersten Fahrzeuges 101 zumindest mittels eines sich in einer Querrichtung QR des ersten Fahrzeuges 101 erstreckenden Lichtstreifens 10 erfolgt, wobei insbesondere der Lichtstreifen 10 an einer Scheibenwurzel einer Frontscheibe des ersten Fahrzeuges 101 angeordnet ist. Es kann weiter von Vorteil sein, wenn bei dem Verfahren zusätzlich, d. h. optional, der Lichtstreifen 10 einen ersten Lichtbereich 11 und zumindest einen weiteren Lichtbereich 12 aufweist, wobei der erste Lichtbereich 11 und der weitere Lichtbereich 12 separat voneinander ansteuerbar sind, und wobei das Anzeigen 340 des Spurwechselwunsches des zweiten Fahrzeuges dem Fahrer des ersten Fahrzeuges 101 in Abhängigkeit einer Position des ersten Fahrzeuges 101 in Bezug auf das zweite Fahrzeug in dem ersten Lichtbereich 11 oder dem zweiten Lichtbereich 12 des Lichtstreifens 10 erfolgt. Es kann weiter von Vorteil sein, wenn bei dem Verfahren zusätzlich, d. h. optional, der Lichtstreifen eine Länge von 0,5 - 3,0 m, insbesondere eine Länge von 1,0 - 2,5 m, aufweist.

Es kann weiter von Vorteil sein, wenn bei dem Verfahren zusätzlich, d. h. optional, das Anzeigen 340 des Spurwechselwunsches des zweiten Fahrzeuges dem Fahrer des ersten Fahrzeuges 101 in dem Blickfeld des Fahrers in dem Fahrzeuginnenraum des ersten Fahrzeuges 101 durch ein sich veränderndes Lichtsignal, insbesondere durch ein gelb blinkendes Lichtsignal, erfolgt.

Es kann weiter von Vorteil sein, wenn bei dem Verfahren zusätzlich, d. h. optional, das Anzeigen 340 des Spurwechselwunsches des zweiten Fahrzeuges dem Fahrer des ersten Fahrzeuges 101 in dem Blickfeld des Fahrers in dem Fahrzeuginnenraum des ersten Fahrzeuges 101 in einer Anzeigevorrichtung 60 mithilfe einer Visualisierung eines Fahrzeugumfeldes des ersten Fahrzeuges 101 erfolgt.

Es kann weiter von Vorteil sein, wenn bei dem Verfahren zusätzlich, d. h. optional, ein jeweiliges Anzeigen 340 des Spurwechselwunsches des zweiten Fahrzeuges sowie eines weiteren Fahrzeuges in dem Blickfeld des Fahrers in dem Fahrzeuginnenraum des ersten Fahrzeuges 101 bei einem jeweiligen Erkennen 320 eines Spurwechselwunsches des zweiten Fahrzeuges sowie zumindest eines weiteren Fahrzeuges auf den ersten Fahrstreifen erfolgt, um den Fahrer des ersten Fahrzeuges 101 auf den Spurwechselwunsch des zweiten Fahrzeuges sowie auf den Spurwechselwunsch des weiteren Fahrzeuges aufmerksam zu machen.

Es kann weiter von Vorteil sein, wenn bei dem Verfahren zusätzlich, d. h. optional, für das Erkennen 320 des Spurwechselwunsches zumindest des zweiten Fahrzeuges durch das erste Fahrzeug 101 ein Erfassen 300 der Fahrzeugumgebung des ersten Fahrzeuges 101 durch das erste Fahrzeug 101 erfolgt, wobei insbesondere das Erfassen 300 der Fahrzeugumgebung des ersten Fahrzeuges 101 mittels zumindest einer Kamera des ersten Fahrzeuges 101 erfolgt und/oder dass für das Erkennen 320 des Spurwechselwunsches zumindest des zweiten Fahrzeuges durch das erste Fahrzeug 101 das zweite Fahrzeug zumindest den Spurwechselwunsch dem ersten Fahrzeug 101 funktechnisch mitteilt 310, wobei insbesondere das funktechnische Mitteilen 310 zumindest des Spurwechselwunsches des zweiten Fahrzeuges mittels einer Cooperative Awareness Message erfolgt.

### Bezugszeichenliste

- 10: Lichtstreifen
- 11: erster Lichtbereich
- 12: weiterer Lichtbereich
- 20: Display
- 40: Erfassungsvorrichtung
- 41: Empfangsvorrichtung
- 50: Erkennungsvorrichtung
- 60: Anzeigevorrichtung

- 101: (erstes) Fahrzeug

- 300: Erfassen Fahrzeugumgebung
- 310: funktechnisches Mitteilen Spurwechselwunsch
- 320: Erkennen Spurwechselwunsch
- 340: Anzeigen Spurwechselwunsch

- QR: Querrichtung
- VR: Vorwärtsrichtung

## Patentansprüche

1. Verfahren zum Aufmerksammachen eines Fahrers eines sich auf einem ersten Fahrstreifen befindlichen ersten Fahrzeuges (101) auf einen Spurwechselwunsch zumindest eines zweiten Fahrzeuges auf den ersten Fahrstreifen, wobei das Verfahren umfasst:
- Erkennen (320) des Spurwechselwunsches zumindest des zweiten Fahrzeuges durch das erste Fahrzeug (101), wobei für das Erkennen (320) des Spurwechselwunsches zumindest des zweiten Fahrzeuges durch das erste Fahrzeug (101) das zweite Fahrzeug zumindest den Spurwechselwunsch dem ersten Fahrzeug (101) funktechnisch mitteilt (310),
- Anzeigen (340) des Spurwechselwunsches des zweiten Fahrzeuges dem Fahrer des ersten Fahrzeuges (101) in einem Blickfeld des Fahrers in einem Vorderbereich eines Fahrzeuginnenraums des ersten Fahrzeuges (101), um den Fahrer des ersten Fahrzeuges (101) auf den Spurwechselwunsch des zweiten Fahrzeuges aufmerksam zu machen, wobei das Anzeigen (340) des Spurwechselwunsches des zweiten Fahrzeuges dem Fahrer des ersten Fahrzeuges (101) in dem Blickfeld des Fahrers in dem Fahrzeuginnenraum des ersten Fahrzeuges (101) zumindest mittels eines sich in einer Querrichtung (QR) des ersten Fahrzeuges (101) erstreckenden als Anzeigevorrichtung (60) ausgebildeten Lichtstreifens (10) erfolgt, wobei der Lichtstreifen (10) einen ersten Lichtbereich (11) und zumindest einen weiteren Lichtbereich (12) aufweist, wobei der erste Lichtbereich (11) und der weitere Lichtbereich (12) separat voneinander ansteuerbar sind, und wobei das Anzeigen (340) des Spurwechselwunsches des zweiten Fahrzeuges dem Fahrer des ersten Fahrzeuges (101) in Abhängigkeit einer Position des ersten Fahrzeuges (101) in Bezug auf das zweite Fahrzeug in dem ersten Lichtbereich (11) oder dem zweiten Lichtbereich (12) des Lichtstreifens (10) erfolgt.

2. Verfahren nach Anspruch 1,
**dadurch gekennzeichnet,**
**dass** das erste Fahrzeug (101) den Spurwechselwunsch des zweiten Fahrzeuges dem Fahrer des ersten Fahrzeuges (101) nur anzeigt (340), wenn der Spurwechselwunsch Relevanz für das erste Fahrzeug (101) hat, wobei die Relevanz des Spurwechselwunsches in Abhängigkeit einer Fahrspur des ersten Fahrzeuges (101) und einer Fahrspur des zweiten Fahrzeuges und/oder in Abhängigkeit eines Abstands des ersten Fahrzeuges (101) zu dem zweiten Fahrzeug und/oder in Abhängigkeit einer Geschwindigkeit des ersten Fahrzeuges (101) und/oder des zweiten Fahrzeuges bestimmt wird.

3. Verfahren nach einem der vorangegangenen Ansprüche,
**dadurch gekennzeichnet,**
**dass** der Lichtstreifen (10) an einer Scheibenwurzel einer Frontscheibe des ersten Fahrzeuges (101) angeordnet ist.

4. Verfahren nach einem der vorangegangenen Ansprüche,
**dadurch gekennzeichnet,**
**dass** der Lichtstreifen eine Länge von 0,5 - 3,0 m, insbesondere eine Länge von 1,0 - 2,5 m, aufweist.

5. Verfahren nach einem der vorangegangenen Ansprüche,
**dadurch gekennzeichnet,**
**dass** das Anzeigen (340) des Spurwechselwunsches des zweiten Fahrzeuges dem Fahrer des ersten Fahrzeuges (101) in dem Blickfeld des Fahrers in dem Fahrzeuginnenraum des ersten Fahrzeuges (101) durch ein sich veränderndes Lichtsignal, insbesondere durch ein gelb blinkendes Lichtsignal, erfolgt.

6. Verfahren nach einem der vorangegangenen Ansprüche,
**dadurch gekennzeichnet,**
**dass** das Anzeigen (340) des Spurwechselwunsches des zweiten Fahrzeuges dem Fahrer des ersten Fahrzeuges (101) in dem Blickfeld des Fahrers in dem Fahrzeuginnenraum des ersten Fahrzeuges (101) in der Anzeigevorrichtung (60) mithilfe einer Visualisierung eines Fahrzeugumfeldes des ersten Fahrzeuges (101) erfolgt.

7. Verfahren nach einem der vorangegangenen Ansprüche,
**dadurch gekennzeichnet,**
**dass** ein jeweiliges Anzeigen (340) des Spurwechselwunsches des zweiten Fahrzeuges sowie eines weiteren Fahrzeuges in dem Blickfeld des Fahrers in dem Fahrzeuginnenraum des ersten Fahrzeuges (101) bei einem jeweiligen Erkennen (320) eines Spurwechselwunsches des zweiten Fahrzeuges sowie zumindest eines weiteren Fahrzeuges auf den ersten Fahrstreifen erfolgt, um den Fahrer des ersten Fahrzeuges (101) auf den Spurwechselwunsch des zweiten Fahrzeuges sowie auf den Spurwechselwunsch des weiteren Fahrzeuges aufmerksam zu machen.

8. Verfahren nach einem der vorangegangenen Ansprüche,
**dadurch gekennzeichnet,**
**dass** für das Erkennen (320) des Spurwechselwunsches zumindest des zweiten Fahrzeuges durch das erste Fahrzeug (101) zusätzlich ein Erfassen (300) der Fahrzeugumgebung des ersten Fahrzeuges (101) durch das erste Fahrzeug (101) erfolgt, wobei insbesondere das Erfassen (300) der Fahrzeugumgebung des ersten Fahrzeuges (101) mittels zumindest einer Kamera des ersten Fahrzeuges (101) erfolgt und
wobei das funktechnische Mitteilen (310) zumindest des Spurwechselwunsches des zweiten Fahrzeuges mittels einer Cooperative Awareness Message erfolgt.

9. Fahrzeug (101), wobei das Fahrzeug (101) dazu ausgebildet ist, ein Verfahren nach einem der vorangegangenen Ansprüche durchzuführen, wobei das Fahrzeug (101) aufweist:
- eine Erkennungsvorrichtung (50) zum Erkennen eines Spurwechselwunsches zumindest eines zweiten Fahrzeuges,
- eine Anzeigevorrichtung (60) zum Anzeigen zumindest des Spurwechselwunsches des zweiten Fahrzeuges einem Fahrer des Fahrzeuges (101) in einem Blickfeld des Fahrers in einem Vorderbereich eines Fahrzeuginnenraums des Fahrzeuges (101), um den Fahrer des Fahrzeuges (101) auf den Spurwechselwunsch des zweiten Fahrzeuges aufmerksam zu machen,
- eine Empfangsvorrichtung (41) zum Empfangen zumindest einer funktechnischen Mitteilung des zweiten Fahrzeuges über den Spurwechselwunsch des zweiten Fahrzeuges.

10. Fahrzeug (101) nach Anspruch 9,
**dadurch gekennzeichnet,**
**dass** das Fahrzeug (101) ferner eine Erfassungsvorrichtung (40) zum Erfassen der Fahrzeugumgebung des Fahrzeuges (101) aufweist.

11. Computerprogrammprodukt, umfassend Befehle, die bewirken, dass eine Computereinheit eines Fahrzeuges (101) nach Anspruch 9 oder 10 Verfahrensschritte gemäß einem Verfahren nach einem der Ansprüche 1 - 8 ausführt.

12. Computerlesbares Medium, auf dem ein Computerprogrammprodukt nach Anspruch 11 gespeichert ist.

13. Datenträgersignal, das ein Computerprogrammprodukt nach Anspruch 11 überträgt.

## Claims

1. Method for alerting a driver of a first vehicle (101) in a first traffic lane to a lane change intention, to the first traffic lane, at least of a second vehicle, wherein the method comprises:
- recognizing (320), by the first vehicle (101), the lane change intention at least of the second vehicle, wherein in order for the first vehicle (101) to recognize (320) the lane change intention at least of the second vehicle, the second vehicle wirelessly communicates (310) at least the lane change intention to the first vehicle (101),
- displaying (340) the lane change intention of the second vehicle to the driver of the first vehicle (101) in a field of vision of the driver in a front region of a vehicle interior of the first vehicle (101), in order to alert the driver of the first vehicle (101) to the lane change intention of the second vehicle, wherein the lane change intention of the second vehicle is displayed (340) to the driver of the first vehicle (101) in the field of vision of the driver in the vehicle interior of the first vehicle (101) at least by means of a light strip (10) extending in a transverse direction (QR) of the first vehicle (101) and designed as a display device (60), wherein the light strip (10) has a first light region (11) and at least a further light region (12), wherein the first light region (11) and the further light region (12) can be controlled separately from one another, and wherein the lane change intention of the second vehicle is displayed (340), to the driver of the first vehicle (101), in the first light region (11) or in the second light region (12) of the light strip (10) depending on a position of the first vehicle (101) in relation to the second vehicle.

2. Method according to claim 1,
**characterized in that**
the first vehicle (101) only displays (340) the lane change intention of the second vehicle to the driver of the first vehicle (101) when the lane change intention is relevant to the first vehicle (101), wherein the relevance of the lane change intention is determined depending on a lane of the first vehicle (101) and a lane of the second vehicle and/or depending on a distance of the first vehicle (101) to the second vehicle and/or depending on a speed of the first vehicle (101) and/or of the second vehicle.

3. Method according to either of the preceding claims,
**characterized in that**
the light strip (10) is arranged at a windshield base of a windshield of the first vehicle (101).

4. Method according to any of the preceding claims,
**characterized in that**
the light strip has a length of 0.5 - 3.0 m, in particular a length of 1.0 - 2.5 m.

5. Method according to any of the preceding claims,
**characterized in that**
the lane change intention of the second vehicle is displayed (340) to the driver of the first vehicle (101) in the field of vision of the driver in the vehicle interior of the first vehicle (101) by a changing light signal, in particular by a yellow flashing light signal.

6. Method according to any of the preceding claims,
**characterized in that**
the lane change intention of the second vehicle is displayed (340) to the driver of the first vehicle (101) in the field of vision of the driver in the vehicle interior of the first vehicle (101), by means of a visualization of vehicle surroundings of the first vehicle (101) in the display device (60).

7. Method according to any of the preceding claims,
**characterized in that**
the lane change intention of the second vehicle as well as of a further vehicle is displayed (340) in each case in the field of vision of the driver in the vehicle interior of the first vehicle (101) upon a relevant recognition (320) of a lane change intention, to the first traffic lane, of the second vehicle as well as at least of a further vehicle, in order to alert the driver of the first vehicle (101) to the lane change intention of the second vehicle as well as to the lane change intention of the further vehicle.

8. Method according to any of the preceding claims,
**characterized in that**
in order for the first vehicle (101) to recognize (320) the lane change intention at least of the second vehicle, the first vehicle (101) additionally detects (300) the vehicle surroundings of the first vehicle (101), wherein in particular the vehicle surroundings of the first vehicle (101) are detected (300) by means of at least a camera of the first vehicle (101) and wherein at least the lane change intention of the second vehicle is wirelessly communicated (310) by means of a Cooperative Awareness Message.

9. Vehicle (101), wherein the vehicle (101) is designed to carry out a method according to any of the preceding claims, wherein the vehicle (101) comprises:
- a recognition device (50) for recognizing a lane change intention at least of a second vehicle,
- a display device (60) for displaying at least the lane change intention of the second vehicle to a driver of the vehicle (101) in a field of vision of the driver in a front region of a vehicle interior of the vehicle (101), in order to alert the driver of the vehicle (101) to the lane change intention of the second vehicle,
- a receiving device (41) for receiving at least a wireless communication from the second vehicle regarding the lane change intention of the second vehicle.

10. Vehicle (101) according to claim 9,
**characterized in that**
the vehicle (101) further comprises a detection device (40) for detecting the vehicle surroundings of the vehicle (101).

11. Computer program product comprising commands which cause a computer unit of a vehicle (101) according to claim 9 or 10 to perform method steps according to a method according to any of claims 1-8.

12. Computer-readable medium on which a computer program product according to claim 11 is stored.

13. Data carrier signal which transmits a computer program product according to claim 11.

## Revendications

1. Procédé permettant de signaler à un conducteur d'un premier véhicule (101) se trouvant sur une première voie de circulation l'intention d'au moins un second véhicule de changer de file pour s'engager sur la première voie de circulation, dans lequel le procédé comprend :
- la reconnaissance (320) par le premier véhicule (101) de l'intention de changement de file d'au moins le second véhicule, dans lequel, pour la reconnaissance (320) par le premier véhicule (101) de l'intention de changement de file d'au moins le second véhicule, le second véhicule communique (310) au premier véhicule (101), par voie radio, au moins l'intention de changement de file,
- l'affichage (340) de l'intention de changement de file du second véhicule à l'intention du conducteur du premier véhicule (101) dans un champ de vision du conducteur dans une zone avant d'un habitacle de véhicule du premier véhicule (101), afin de signaler au conducteur du premier véhicule (101) l'intention de changement de file du second véhicule, dans lequel l'affichage (340) de l'intention de changement de file du second véhicule à l'intention du conducteur du premier véhicule (101) dans le champ de vision du conducteur dans l'habitacle de véhicule du premier véhicule (101) s'effectue au moins par le biais d'une bande lumineuse (10) s'étendant dans une direction transversale (QR) du premier véhicule (101) et conçue comme un dispositif d'affichage (60), dans lequel la bande lumineuse (10) présente une première zone lumineuse (11) et au moins une autre zone lumineuse (12), dans lequel la première zone lumineuse (11) et l'autre zone lumineuse (12) peuvent être commandées séparément l'une de l'autre, et dans lequel l'affichage (340) de l'intention de changement de file du second véhicule à l'intention du conducteur du premier véhicule (101) s'effectue en fonction d'une position du premier véhicule (101) par rapport au second véhicule dans la première zone lumineuse (11) ou dans la seconde zone lumineuse (12) de la bande lumineuse (10).

2. Procédé selon la revendication 1,
**caractérisé en ce**
**que** le premier véhicule (101) affiche (340) à l'intention du conducteur du premier véhicule (101) l'intention de changement de file du second véhicule, seulement si l'intention de changement de file est pertinente pour le premier véhicule (101), dans lequel la pertinence de l'intention de changement de file est déterminée en fonction de la voie de circulation du premier véhicule (101) et d'une voie de circulation du second véhicule et/ou en fonction d'une distance entre le premier véhicule (101) et le second véhicule et/ou en fonction d'une vitesse du premier véhicule (101) et/ou du second véhicule.

3. Procédé selon l'une des revendications précédentes,
**caractérisé en ce**
**que** la bande lumineuse (10) est agencée au niveau d'une embase d'un pare-brise du premier véhicule (101).

4. Procédé selon l'une des revendications précédentes,
**caractérisé en ce**
**que** la bande lumineuse présente une longueur comprise entre 0,5 et 3,0 m, en particulier une longueur comprise entre 1,0 et 2,5 m.

5. Procédé selon l'une des revendications précédentes,
**caractérisé en ce**
**que** l'affichage (340) de l'intention de changement de file du second véhicule à l'intention du conducteur du premier véhicule (101) dans le champ de vision du conducteur s'effectue dans l'habitacle de véhicule du premier véhicule (101) au moyen d'un signal lumineux variable, notamment d'un signal lumineux jaune clignotant.

6. Procédé selon l'une des revendications précédentes,
**caractérisé en ce**
**que** l'affichage (340) de l'intention de changement de file du second véhicule à l'intention du conducteur du premier véhicule (101) dans le champ de vision du conducteur s'effectue dans l'habitacle de véhicule du premier véhicule (101) dans le dispositif d'affichage (60), à l'aide d'une visualisation d'un environnement de véhicule du premier véhicule (101).

7. Procédé selon l'une des revendications précédentes,
**caractérisé en ce**
**qu'**un affichage (340) respectif de l'intention de changement de file du second véhicule ainsi que d'un autre véhicule s'effectue dans le champ de vision du conducteur dans l'habitacle de véhicule du premier véhicule (101), lors d'une reconnaissance (320) respective d'une intention de changement de file du second véhicule ainsi que d'au moins un autre véhicule vers la première voie de circulation, afin de signaler au conducteur du premier véhicule (101) l'intention de changement de file du second véhicule ainsi que l'intention de changement de file de l'autre véhicule.

8. Procédé selon l'une des revendications précédentes,
**caractérisé en ce**
**que**, pour la reconnaissance (320) de l'intention de changement de file au moins du second véhicule par le premier véhicule (101), une reconnaissance (300) de l'environnement de véhicule du premier véhicule (101) s'effectue de plus par le premier véhicule (101), dans lequel en particulier la reconnaissance (300) de l'environnement de véhicule du premier véhicule (101) s'effectue par le biais d'au moins une caméra du premier véhicule (101) et dans lequel la communication par voie radio (310) au moins de l'intention de changement de file du second véhicule s'effectue par le biais d'un message de prise de conscience coopérative.

9. Véhicule (101), dans lequel le véhicule (101) est conçu pour mettre en œuvre un procédé selon l'une des revendications précédentes, dans lequel le véhicule (101) présente :
- un dispositif de reconnaissance (50) destiné à reconnaître une intention de changement de file d'au moins un second véhicule,
- un dispositif d'affichage (60) destiné à afficher au moins l'intention de changement de file du second véhicule à l'intention d'un conducteur du véhicule (101) dans un champ de vision du conducteur dans une zone avant d'un habitacle de véhicule du véhicule (101), afin de signaler au conducteur du véhicule (101) l'intention de changement de file du second véhicule,
- un dispositif de réception (41) destiné à recevoir au moins une communication par voie radio du second véhicule indiquant l'intention de changement de file du second véhicule.

10. Véhicule (101) selon la revendication 9,
**caractérisé en ce**
**que** le véhicule (101) présente en outre un dispositif de reconnaissance (40) destiné à reconnaître l'environnement de véhicule du véhicule (101).

11. Produit de programme informatique comprenant des instructions qui amènent une unité informatique d'un véhicule (101) selon la revendication 9 ou 10 à exécuter des étapes de procédé conformément à un procédé selon l'une des revendications 1 à 8.

12. Support lisible par ordinateur, sur lequel est stocké un produit de programme informatique selon la revendication 11.

13. Signal de support de données, qui transmet un produit de programme informatique selon la revendication 11.
